# EUROPEAN PATENT APPLICATION

(11) **EP 4 604 629 A1**
(43) Date of publication of application: **20.08.2025**
(21) Application number: 25156291.4
(22) Date of filing: 06.02.2025
(51) Int. Cl.: H04W 52/36, H04L 1/00, H04L 5/00

(54) **HANDLING UPLINK INTERFERENCE IN COMMUNICATIONS**

(30) Priority: 13.02.2024 FI 20245149
(71) Applicant: Nokia Solutions and Networks Oy, 02610 Espoo (FI)
(72) Inventor: PARELLO, Rosalia, Versailles (FR); VERDIER, Denis, Versailles (FR)
(74) Representative: Nokia EPO representatives

(57) **Abstract**

An apparatus is disclosed, comprising at least one processor, and at least one memory storing instructions that, when executed by the at least one processor, cause the apparatus at least to define (301) different prioritized frequency layouts for uplink signal interference handling, verify (302) first radio conditions for enabling most appropriate uplink reference signal waveform emission, verify (303) second radio conditions for signalling lower allowed uplink power back-off and uplink maximum output power class boosting, and, based on the verifying, initiate (304) signalling to mitigate uplink signal interference by redirecting uplink service traffic to a most appropriate prioritized frequency layout.

## Description

### FIELD

The following example embodiments relate to wireless communication and to uplink interference handling.

### BACKGROUND

Modern wireless communication standards use spectrally efficient linear modulation schemes that are sensitive to both signal amplitude and phase distortions occurrence. Any nonlinearity in a transmitter device may cause signal spectral regrowth, i.e. unwanted rising power for frequencies on each side of the amplified signal channel carrier. To avoid interference with adjacent channels, highly linear power amplifier (PA) properties are needed as dominating the transmitter device linearity characterization.

### BRIEF DESCRIPTION

The scope of protection sought for various example embodiments is set out by the independent claims. The example embodiments and features, if any, described in this specification that do not fall under the scope of the independent claims are to be interpreted as examples useful for understanding various embodiments.

According to an aspect, there is provided an apparatus comprising at least one processor, and at least one memory storing instructions that, when executed by the at least one processor, cause the apparatus at least to:
define different prioritized frequency layouts for uplink signal interference handling;
verify first radio conditions for enabling most appropriate uplink reference signal waveform emission;
verify second radio conditions for signalling lower allowed uplink power back-off and uplink maximum output power class boosting; and
based on the verifying, initiate signalling to mitigate uplink signal interference by redirecting uplink service traffic to a most appropriate prioritized frequency layout.

According to another aspect, there is provided an apparatus comprising: means for
defining different prioritized frequency layouts for uplink signal interference handling;
verifying first radio conditions for enabling most appropriate uplink reference signal waveform emission;
verifying second radio conditions for signalling lower allowed uplink power back-off and uplink maximum output power class boosting; and
initiating signalling to mitigate uplink signal interference by redirecting uplink service traffic to most appropriate prioritized frequency layout among said different prioritized frequency layouts, based on the verifying.

According to another aspect, there is provided a method comprising:
defining, by an apparatus, different prioritized frequency layouts for uplink signal interference handling;
verifying, by the apparatus, first radio conditions for enabling most appropriate uplink reference signal waveform emission;
verifying, by the apparatus, second radio conditions for signalling lower allowed uplink power back-off and uplink maximum output power class boosting; and
based on the verifying, initiating, by the apparatus, signalling to mitigate uplink signal interference by redirecting uplink service traffic to most appropriate prioritized frequency layout among said different prioritized frequency layouts.

According to another aspect, there is provided a computer program comprising instructions which, when executed by an apparatus, cause the apparatus to perform at least the following:
define different prioritized frequency layouts for uplink signal interference handling;
verify first radio conditions for enabling most appropriate uplink reference signal waveform emission;
verify second radio conditions for signalling lower allowed uplink power back-off and uplink maximum output power class boosting; and
based on the verifying, initiate signalling to mitigate uplink signal interference by redirecting uplink service traffic to a most appropriate prioritized frequency layout.

According to another aspect, there is provided a computer readable medium comprising program instructions which, when executed by an apparatus, cause the apparatus to perform at least the following:
define different prioritized frequency layouts for uplink signal interference handling;
verify first radio conditions for enabling most appropriate uplink reference signal waveform emission;
verify second radio conditions for signalling lower allowed uplink power back-off and uplink maximum output power class boosting; and
based on the verifying, initiate signalling to mitigate uplink signal interference by redirecting uplink service traffic to a most appropriate prioritized frequency layout.

According to another aspect, there is provided a non-transitory computer readable medium comprising program instructions which, when executed by an apparatus, cause the apparatus to perform at least the following:
define different prioritized frequency layouts for uplink signal interference handling;
verify first radio conditions for enabling most appropriate uplink reference signal waveform emission;
verify second radio conditions for signalling lower allowed uplink power back-off and uplink maximum output power class boosting; and
based on the verifying, initiate signalling to mitigate uplink signal interference by redirecting uplink service traffic to a most appropriate prioritized frequency layout.

According to another aspect, there is provided a device comprising at least one processor, and at least one memory storing instructions that, when executed by the at least one processor, cause the device at least to:
receive, from an access node, configuration signalling for mitigating uplink signal interference by redirecting uplink service traffic to most appropriate prioritized frequency layout among different prioritized frequency layouts; and
based on the configuration signalling, mitigate the uplink signal interference by redirecting the uplink service traffic to the most appropriate prioritized frequency layout among the different prioritized frequency layouts.

According to another aspect, there is provided a device comprising: means for
receiving, from an access node, configuration signalling for mitigating uplink signal interference by redirecting uplink service traffic to most appropriate prioritized frequency layout among different prioritized frequency layouts; and
mitigating the uplink signal interference by redirecting the uplink service traffic to the most appropriate prioritized frequency layout among the different prioritized frequency layouts, based on the configuration signalling.

According to another aspect, there is provided a method comprising:
receiving, by a terminal device from an access node, configuration signalling for mitigating uplink signal interference by redirecting uplink service traffic to most appropriate prioritized frequency layout among different prioritized frequency layouts; and
based on the configuration signalling, mitigating, by the terminal device, the uplink signal interference by redirecting the uplink service traffic to the most appropriate prioritized frequency layout among the different prioritized frequency layouts.

According to another aspect, there is provided a computer program comprising instructions which, when executed by an apparatus, cause the apparatus to perform at least the following:
receive, from an access node, configuration signalling for mitigating uplink signal interference by redirecting uplink service traffic to most appropriate prioritized frequency layout among different prioritized frequency layouts; and
based on the configuration signalling, mitigate the uplink signal interference by redirecting the uplink service traffic to the most appropriate prioritized frequency layout among the different prioritized frequency layouts.

According to another aspect, there is provided a computer readable medium comprising program instructions which, when executed by an apparatus, cause the apparatus to perform at least the following:
receive, from an access node, configuration signalling for mitigating uplink signal interference by redirecting uplink service traffic to most appropriate prioritized frequency layout among different prioritized frequency layouts; and
based on the configuration signalling, mitigate the uplink signal interference by redirecting the uplink service traffic to the most appropriate prioritized frequency layout among the different prioritized frequency layouts.

According to another aspect, there is provided a non-transitory computer readable medium comprising program instructions which, when executed by an apparatus, cause the apparatus to perform at least the following:
receive, from an access node, configuration signalling for mitigating uplink signal interference by redirecting uplink service traffic to most appropriate prioritized frequency layout among different prioritized frequency layouts; and
based on the configuration signalling, mitigate the uplink signal interference by redirecting the uplink service traffic to the most appropriate prioritized frequency layout among the different prioritized frequency layouts.

### LIST OF DRAWINGS

In the following, various example embodiments will be described in greater detail with reference to the accompanying drawings, in which
FIG. 1 illustrates an example of a wireless communication network;
FIG. 2 illustrates exemplary uplink interference handling;
FIGs. 3 to 4 illustrate an embodiment of carrying out the process of FIG. 2;
FIG. 5 illustrates a block diagram of a structure of an apparatus according to an embodiment.
FIG. 6 illustrates an example of input vs. output power amplifier;
FIG. 7 illustrates an example of UL interference arising from UL signal waveform power boosted emission.

### DETAILED DESCRIPTION

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

Some example embodiments described herein may be implemented in a wireless communication network comprising a radio access network based on one or more of the following radio access technologies (RATs): Global System for Mobile Communications (GSM) or any other second generation radio access technology, Universal Mobile Telecommunication System (UMTS, 3G) based on basic wideband-code division multiple access (W-CDMA), high-speed packet access (HSPA), Long Term Evolution (LTE), LTE-Advanced, fourth generation (4G), fifth generation (5G), 5G new radio (NR), 5G-Advanced (i.e., 3GPP NR Rel-18 and beyond), or sixth generation (6G). Some examples of radio access networks include the universal mobile telecommunications system (UMTS) radio access network (UTRAN), the Evolved Universal Terrestrial Radio Access network (E-UTRA), or the next generation radio access network (NG-RAN). The wireless communication network may further comprise a core network, and some example embodiments may also be applied to network functions of the core network.

It should be noted that the embodiments are not restricted to the wireless communication network given as an example, but a person skilled in the art may also apply the solution to other wireless communication networks or systems provided with necessary properties. For example, some example embodiments may also be applied to a communication system based on IEEE 802.11 specifications, or a communication system based on IEEE 802.15 specifications. IEEE is an abbreviation for the Institute of Electrical and Electronics Engineers.

Wireless communications systems design and deployment aim to provide multiple telecommunications services and may include several access nodes (gNB) or base stations (BS) providing cell coverage to support communications for a number of user equipment (UE). A user equipment or mobile terminal may communicate with the access node or network element via a downlink and uplink. The downlink (DL) refers to a communications link from the access node to the UE, and the uplink (UL) refers to a communications link from the UE to the access node.

Multiple-access technologies may include different multiplexed resources variants, such as code division multiple access (CDMA) systems, time division multiple access (TDMA) systems, frequency-division multiple access (FDMA) systems, orthogonal frequency-division multiple access (OFDMA) systems, single-carrier frequency-division multiple access (SC-FDMA) systems, time division synchronous code division multiple access (TD-SCDMA) systems, and long-term evolution (LTE). Modern wireless communication standards use spectrally efficient linear modulation schemes that are sensitive to both signal amplitude and phase distortions occurrence. Any nonlinearity in transmitter device could cause signal spectral regrowth, i.e. unwanted rising power for frequencies on each side of the amplified signal channel carrier. To avoid interference with adjacent channels, highly linear power amplifier (PA) properties are desired as dominating the transmitter device linearity characterization.

In wireless access network, the cell coverage and the cell size dimensioning are to consider the limiting Power Amplifier (PA) implementation factors in RF transmitter, having higher impact on the UL signal statistics integrity depending on the signal waveform to be transmitted: the higher the occurrence rate of composite signal crest envelope variations around transmitter Power Amplifier clipping threshold is, the higher the impact of the transmitted signal distortions.

Key constraining factors in the design and transmitter PA implementation may be represented by the maximum Class of Power Amplifier with limited battery consumption, by the transmitter non-linear components, characterized by limited linear dynamic range in high-power amplifiers and inducing non-linear distortion of the amplified signal crest envelope. The higher the power of emitted signals is, the higher the non-linear distortions effects are, meaning higher impact on statistics integrity of original signal after modulation and amplification stages (Error Vector Magnitude, E.V.M.). The Peak-to-Average Power Ratio (PAPR) translates the high input amplitude in dynamic range and hence quantifies the degradation effect: a higher PAPR leads to heavier signal statistics degradation due to PA non-linearities.

In wireless access network, for the cell-edge definition, the high PAPR enforces negative link budget margins and may represent a dominant factor. Tradeoff between power efficiency and linearity makes PA design more challenging: the lower the amplifier output power is, the more the amplifier becomes linear at the expense of lower power efficiency. Additionally, the modulation schemes with high PAPR require the power amplifier to work at power levels much lower than its saturated power, to satisfy the linearity requirements of transmitter.

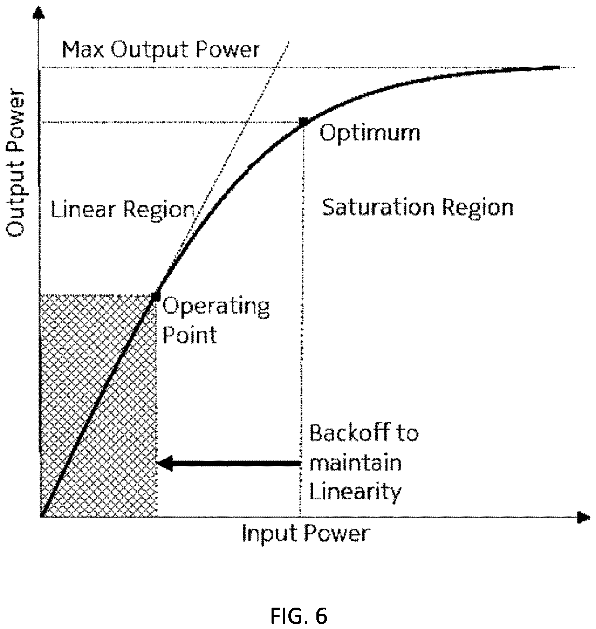

As the amplitude variations of an OFDMA (Orthogonal Frequency-Division Multiple Access) modulated signal may be very high, the PAPR of an OFDM (Orthogonal Frequency Division Multiplexing) signal may be highly relevant. The OFDMA use in multicarrier approach for multiple access makes the transmitter design more costly, requesting for the need for a highly linear RF power amplifier. Practical Power Amplifiers (PAs) of RF transmitters are linear only within a limited dynamic range. Thus, the OFDM signal is likely to suffer from non-linear distortion caused by clipping. This gives rise to out of-band spurious emissions and in-band corruption of the signal. To avoid such distortion, the PAs are to operate with large power Back-offs (see Figure 6) that may lead to inefficient amplification. Figure 6 illustrates Linear, Saturation and Backoff regions of Input vs. Output Power Amplifier.

For radio base station DL transmissions, this limitation is not inconsistent with the use of OFDM because low-cost implementation has a lower priority for the base station than for the mobile terminal. On the other side, for UL, the high PAPR is more difficult to be tolerated in UE transmitter because of different aspects to be harmonized: the output power required for good outdoor coverage, the power consumption, and the power amplifier cost. The dilemma to face with arises from researching the UL benefit induced by multicarrier technology advantages while, at the same time, attempting to reduce an excessive cost for the mobile terminal transmitter. Low PAPR of the transmitted waveform allows achieving the right compromise: to avoid excessive cost, size, and power consumption of the UE PA.

From signal processing perspective, extreme low PAPR properties are offered from the design of reference signals with pi/2-binary phase shift keying (Pi/2-BPSK) modulation together with frequency domain spectral shaping (FDSS) technique when UL DFT-s-OFDM (DFT-Spread Orthogonal Frequency Division Multiplexing) waveform is applied: after the DFT operation and prior to subcarrier mapping a pulse-shaping in frequency domain may be performed by element-wise multiplication with the spectrum of the desired pulse-shaping filter. Filter shaping usage allows reducing the crest envelope variations of the composite signal around clipping threshold and entering linear PA dynamic range. This is possible at the expense of spectral efficiency for losses induced from the resulting non-zero excess filter bandwidth: the bandwidth expansion caused by filter shaping operation requires the code rate to be increased for a given data rate. As result, to provide performance improvement, higher energy is required with the size of the power increase being approximately equal to the PAPR reduction achieved by filter shaping operation. The reduced power output back-off could be operated while also boosting the maximum output power amplifier (i.e. Power Amplifier Class change). For example, 0dB power output back-off applied with PA Class change, e.g. from +23 dBm without boosting, to +26 dBm (higher Power Class) boosted maximum output power amplifier. As a result, UE maximum output power boosting together with back-off power reduction in UE transmitter represent cell UL noise rise source that radio access node may need to handle not to degrade cell key performance indicators.

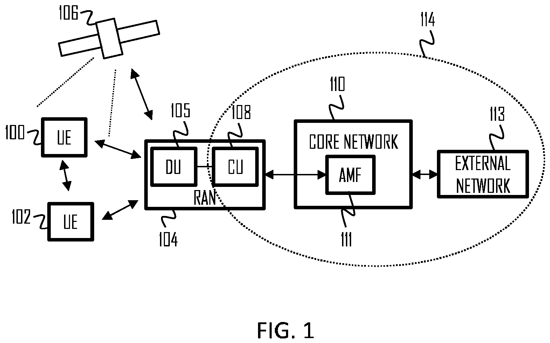

FIG. 1 depicts an example of a simplified wireless communication network showing some physical and logical entities. The connections shown in FIG. 1 may be physical connections or logical connections. It is apparent to a person skilled in the art that the wireless communication network may also comprise other physical and logical entities than those shown in FIG. 1.

The example embodiments described herein are not, however, restricted to the wireless communication network given as an example but a person skilled in the art may apply the example embodiments described herein to other wireless communication networks provided with necessary properties.

The example wireless communication network shown in FIG. 1 includes a radio access network (RAN) and a core network 110.

FIG. 1 shows user equipment (UE) 100, 102 configured to be in a wireless connection on one or more communication channels in a radio cell with an access node 104 of a radio access network.

The access node 104 may comprise a computing device configured to control the radio resources of the access node 104 and to be in a wireless connection with one or more UEs 100, 102. The access node 104 may also be referred to as a base station, a base transceiver station (BTS), an access point, a cell site, a network node, a radio access network node, or a RAN node. The access node 104 may be, for example, an evolved NodeB (abbreviated as eNB or eNodeB), or a next generation evolved NodeB (abbreviated as ng-eNB), or a next generation NodeB (abbreviated as gNB or gNodeB), providing the radio cell. The access node 104 may include or be coupled to transceivers. From the transceivers of the access node 104, a connection may be provided to an antenna unit that establishes a bi-directional radio link to one or more UEs 100, 102. The antenna unit may comprise an antenna or antenna element, or a plurality of antennas or antenna elements.

The wireless connection (e.g., radio link) from a UE 100, 102 to the access node 104 may be called uplink (UL) or reverse link, and the wireless connection (e.g., radio link) from the access node 104 to the UE 100, 102 may be called downlink (DL) or forward link. A UE 100 may also communicate directly with another UE 102, and vice versa, via a wireless connection generally referred to as a sidelink (SL). It should be appreciated that the access node 104 or its functionalities may be implemented by using any node, host, server, access point or other entity suitable for providing such functionalities.

The radio access network may comprise more than one access node 104, in which case the access nodes may also be configured to communicate with one another over wired or wireless links. These links between access nodes may be used for sending and receiving control plane signaling and also for routing data from one access node to another access node.

The access node 104 may further be connected to a core network (CN) 110. The core network 110 may comprise an evolved packet core (EPC) network and/or a 5^{th} generation core network (5GC). The EPC may comprise network entities, such as a serving gateway (S-GW for routing and forwarding data packets), a packet data network gateway (P-GW) for providing connectivity of UEs to external packet data networks, and/or a mobility management entity (MME). The 5GC may comprise one or more network functions, such as at least one of: an access and mobility management function (AMF) 111, a user plane function (UPF), a location management function (LMF), and/or a session management function (SMF).

The core network 110 may also be able to communicate with one or more external networks 113, such as a public switched telephone network or the Internet, or utilize services provided by them. For example, in 5G wireless communication networks, the UPF of the core network 110 may be configured to communicate with an external data network via an N6 interface. In LTE wireless communication networks, the P-GW of the core network 110 may be configured to communicate with an external data network.

It should also be understood that the distribution of functions between core network operations and access node operations may differ in future wireless communication networks compared to that of the LTE or 5G, or even be non-existent.

The illustrated UE 100, 102 is one type of an apparatus to which resources on the air interface may be allocated and assigned. The UE 100, 102 may also be called a wireless communication device, a subscriber unit, a mobile station, a remote terminal, an access terminal, a user terminal, a terminal device, or a user device, just to mention but a few names. The UE 100, 102 may be a computing device operating with or without a subscriber identification module (SIM), including, but not limited to, the following types of computing devices: a mobile phone, a smartphone, a personal digital assistant (PDA), a handset, a computing device comprising a wireless modem (e.g., an alarm or measurement device, etc.), a laptop computer, a desktop computer, a tablet, a game console, a notebook, a multimedia device, a reduced capability (RedCap) device, a wearable device (e.g., a watch, earphones or eyeglasses) with radio parts, a sensor comprising a wireless modem, or a computing device comprising a wireless modem integrated in a vehicle.

It should be appreciated that the UE 100, 102 may also be a nearly exclusive uplink-only device, of which an example may be a camera or video camera loading images or video clips to a network. The UE 100, 102 may also be a device having capability to operate in an Internet of Things (IoT) network, which is a scenario in which objects may be provided with the ability to transfer data over a network without requiring human-to-human or human-to-computer interaction.

The wireless communication network may also be able to support the usage of cloud services. For example, at least part of core network operations may be carried out as a cloud service (this is depicted in FIG. 1 by "cloud" 114). The UE 100, 102 may also utilize the cloud 114. In some applications, the computation for a given UE may be carried out in the cloud 114 or in another UE.

The wireless communication network may also comprise a central control entity, such as a network management system (NMS), or the like. The NMS is a centralized suite of software and hardware used to monitor, control, and administer the network infrastructure. The NMS is responsible for a wide range of tasks such as fault management, configuration management, security management, performance management, and accounting management. The NMS enables network operators to efficiently manage and optimize network resources, ensuring that the network delivers high performance, reliability, and security.

5G enables using multiple-input and multiple-output (MIMO) antennas in the access node 104 and/or the UE 100, 102, many more base stations or access nodes than an LTE network (a so-called small cell concept), including macro sites operating in co-operation with smaller stations and employing a variety of radio technologies depending on service needs, use cases and/or spectrum available. 5G wireless communication networks may support a wide range of use cases and related applications including video streaming, augmented reality, different ways of data sharing and various forms of machine-type applications, such as (massive) machine-type communications (mMTC), including vehicular safety, different sensors and real-time control.

In 5G wireless communication networks, access nodes and/or UEs may have multiple radio interfaces, such as below 6 gigahertz (GHz), centimeter wave (cmWave) and millimeter wave (mmWave), and also being integrable with legacy radio access technologies, such as LTE. Integration with LTE may be implemented, for example, as a system, where macro coverage may be provided by LTE, and 5G radio interface access may come from small cells by aggregation to LTE. In other words, a 5G wireless communication network may support both inter-RAT operability (such as interoperability between LTE and 5G) and inter-RI operability (inter-radio interface operability, such as between below 6GHz, cmWave, and mmWave).

5G wireless communication networks may also apply network slicing, in which multiple independent and dedicated virtual sub-networks (network instances) may be created within the same physical infrastructure to run services that have different requirements on latency, reliability, throughput and mobility.

In one embodiment, an access node 104 may comprise: a radio unit (RU) comprising a radio transceiver (TRX), i.e., a transmitter (Tx) and a receiver (Rx); one or more distributed units (DUs) 105 that may be used for the so-called Layer 1 (L1) processing and real-time Layer 2 (L2) processing; and a central unit (CU) 108 (also known as a centralized unit) that may be used for non-real-time L2 and Layer 3 (L3) processing. The CU 108 may be connected to the one or more DUs 105 for example via an F1 interface. Such an embodiment of the access node 104 may enable the centralization of CUs relative to the cell sites and DUs, whereas DUs may be more distributed and may even remain at cell sites. The CU and DU together may also be referred to as baseband or a baseband unit (BBU). The CU and DU may also be comprised in a radio access point (RAP).

The CU 108 may be a logical node hosting radio resource control (RRC), service data adaptation protocol (SDAP) and/or packet data convergence protocol (PDCP), of the NR protocol stack for an access node 104. The CU 108 may comprise a control plane (CU-CP), which may be a logical node hosting the RRC and the control plane part of the PDCP protocol of the NR protocol stack for the access node 104. The CU 108 may further comprise a user plane (CU-UP), which may be a logical node hosting the user plane part of the PDCP protocol and the SDAP protocol of the CU for the access node 104.

The DU 105 may be a logical node hosting radio link control (RLC), medium access control (MAC) and/or physical (PHY) layers of the NR protocol stack for the access node 104. The operations of the DU 105 may be at least partly controlled by the CU 108. It should also be understood that the distribution of functions between the DU 105 and the CU 108 may vary depending on the implementation.

Cloud computing systems may also be used to provide the CU 108 and/or DU 105. A CU provided by a cloud computing system may be referred to as a virtualized CU (vCU). In addition to the vCU, there may also be a virtualized DU (vDU) provided by a cloud computing system. Furthermore, there may also be a combination, where the DU may be implemented on so-called bare metal solutions, for example application-specific integrated circuit (ASIC) or customer-specific standard product (CSSP) system-on-a-chip (SoC).

Edge cloud may be brought into the radio access network by utilizing network function virtualization (NFV) and software defined networking (SDN). Using edge cloud may mean access node operations to be carried out, at least partly, in a computing system operationally coupled to a remote radio head (RRH) or a radio unit (RU) of an access node 104. It is also possible that access node operations may be performed on a distributed computing system or a cloud computing system located at the access node 104. Application of cloud RAN architecture enables RAN real-time functions being carried out at the radio access network (e.g., in a DU 105), and non-real-time functions being carried out in a centralized manner (e.g., in a CU 108).

5G (or new radio, NR) wireless communication networks may support multiple hierarchies, where multi-access edge computing (MEC) servers may be placed between the core network 110 and the access node 104. It should be appreciated that MEC may be applied in LTE wireless communication networks as well.

A 5G wireless communication network ("5G network") may also comprise a non-terrestrial communication network, such as a satellite communication network, to enhance or complement the coverage of the 5G radio access network. For example, satellite communication may support the transfer of data between the 5G radio access network and the core network 110, enabling more extensive network coverage. Possible use cases may include: providing service continuity for machine-to-machine (M2M) or Internet of Things (IoT) devices or for passengers on board of vehicles, or ensuring service availability for critical communications, and future railway, maritime, or aeronautical communications. Satellite communication may utilize geostationary earth orbit (GEO) satellite systems, but also low earth orbit (LEO) satellite systems, in particular mega-constellations (i.e., systems in which hundreds of (nano)satellites are deployed). A given satellite 106 in the mega-constellation may cover several satellite-enabled network entities that create on-ground cells. The on-ground cells may be created through an on-ground relay access node or by an access node located on-ground or in a satellite.

It is obvious for a person skilled in the art that the access node 104 depicted in FIG. 1 is just an example of a part of a radio access network, and in practice the radio access network may comprise a plurality of access nodes 104, the UEs 100, 102 may have access to a plurality of radio cells, and the radio access network may also comprise other apparatuses, such as physical layer relay access nodes or other entities. At least one of the access nodes may be a Home eNodeB or a Home gNodeB. A Home gNodeB or a Home eNodeB is a type of access node that may be used to provide indoor coverage inside a home, office, or other indoor environment.

Additionally, in a geographical area of a radio access network, a plurality of different kinds of radio cells as well as a plurality of radio cells may be provided. Radio cells may be macro cells (or umbrella cells) which may be large cells having a diameter of up to tens of kilometers, or smaller cells such as micro-, femto- or picocells. The access node(s) 104 of FIG. 1 may provide any kind of these cells. A cellular radio network may be implemented as a multilayer access networks including several kinds of radio cells. In multilayer access networks, one access node may provide one kind of a radio cell or radio cells, and thus a plurality of access nodes may be needed to provide such a multilayer access network.

For fulfilling the need for improving performance of radio access networks, the concept of "plug-and-play" access nodes may be introduced. A radio access network, which may be able to use "plug-and-play" access nodes, may include, in addition to Home eNodeBs or Home gNodeBs, a Home Node B gateway (HNB-GW) (not shown in FIG. 1). An HNB-GW, which may be installed within an operator's radio access network, may aggregate traffic from a large number of Home eNodeBs or Home gNodeBs back to a core network 110 of the operator.

Some example embodiments are described below using principles and terminology of 5G radio access technology without limiting the example embodiments to 5G radio access technology, however.

Handover trigger is traditionally based on DL received signal strength power report indication from mobile user equipment measurements. In wireless access network, a traditional approach to determine if a handover procedure needs to be initiate mainly based on DL coverage degradation and on user equipment indication to radio base station of DL received signal strength power decrease. In some cases, UL coverage is the actual limiting factor, and the cell coverage footprint could be experienced as shrinked in UL rather than in DL. A radio link outage may occur due to UL coverage limitation, for example, before a UE measurement report indication is reported to radio base station for handover procedure initiation.

An embodiment involves defining in the access node different frequency layouts priority for UL Noise Rise handling in the network, verifying in the access node conditions for enabling the most appropriate UL reference signal waveform emission, verifying in the access node the conditions for signaling lower allowed UL power back-off and UL maximum output power class boosting (i.e. UE Power Amplifier Class change), and initiating a signaling procedure to mitigate UL noise rise by redirecting UL service traffic to the most appropriate prioritized frequency layout.

In an embodiment, for UL interference handling, the access node may determine whether to initiate a service traffic redirection for UL noise rise mitigation based on UL reference signal waveform. The methods and apparatuses generally relate to receiver network handling of UL interference from lowered User Equipment (UE) power back-off, simultaneously considering the UL reference signal waveform power emission and UE power boost in an RF transmitter amplifier device. A service redirection trigger, e.g. on different frequency layer, may be based on UL Reference Signal waveform configuration, controlled by the access node signaling to the user equipment. It may be determined whether the service redirection, e.g. on different frequency layer, is to be initiated based on UL criterion handled in the access node.

An embodiment may apply to UL DFT-s-OFDM (DFT-Spread Orthogonal Frequency Division Multiplexing) waveform, pi/2-binary phase shift keying (Pi/2-BPSK) modulated with frequency shaping filtering. This enables to decrease the PAPR as it reduces the rate of composite signal crest envelope amplitude variations around transmitter Power Amplifier clipping threshold. As it also may induce spectral efficiency losses, i.e. due to resulting non-zero excess filter bandwidth, a power compensation is traditionally used to counteract related signal statistics disruption by enabling to the user equipment the maximum output power class boosting and lowered output back-off. While improving cell coverage and user performance, the UL low PAPR reference signal, configured to be transmitted with boosted power amplifier class, contributes to additive noise rise for UL inter and intra-cell interference which is to be reduced by determining whether to initiate via signaling to UE the service traffic redirection on less interfered frequency layout in accordance with an embodiment.

The access node in the access network may handle the additive contribution to UL noise rise induced by UL signal reference waveform power increase, not to degrade cell key performance indicators. The access node may configure the UE either at the communication establishment time, or during call lifetime, to change the UL signal reference waveform (e.g. CP-OFDM, Cyclic Prefix-Orthogonal Frequency Division Multiplexing or low PAPR DFT-s-OFDM, DFT-Spread Orthogonal Frequency Division Multiplexing). For example, the access node may configure a specific reference signal waveform at the communication establishment time for UL Control Channels, or change UL reference signal waveform in degraded radio condition only to improve UL coverage at degraded radio condition in cell edge, e.g. for smaller MCS with Pi/2-binary phase shift keying (Pi/2-BPSK) modulation.

Whatever the criterion adopted for signaling to UE to configure or change UL signal reference waveform with reduced power output Back Off and maximum output UE Power boosted amplifier Class, the access node may determine whether to use the same signaling procedure to also perform service traffic redirection on a different (lower loaded or less interfered) frequency layer; meaning that no additional signaling overhead and no resources loss for additional extra signaling procedure may be required.

In wireless communications, the reduction in power density (i.e. attenuation) encountered by the propagating electromagnetic wave carrying the signal through space, is commonly defined as Path Loss (PL). Path loss is taken into consideration in dimensioning and design of a power link budget of a communications system. Path loss may be due to many effects, such as free-space loss, refraction, diffraction, reflection, and absorption. PL is influenced by terrain clutters, environment (urban or rural, vegetation and foliage), propagation medium (dry or moist air), the distance between the transmitter and the receiver, and the height and location of antennas.

Once the value of DL reference signal power transmitted by the access node is signaled to the user equipment, DL path loss may be evaluated by the user equipment as the difference between a known value of signal power emitted by the transmitter device in the access node and the value of signal power received by a UE receiver device. Once computed, the DL path loss is a basic operating point for the UL transmit power needed to compensate the path loss attenuation encountered by the UL signal. As path loss may be expressed as a function of the distance between the access node and the user equipment, i.e. Path Loss = f(distance), the UL power transmitted by the user equipment may be expressed as a function of the distance, i.e. Ptx needed = g(Path Loss) that directly leads to express the UL power as a function of the distance, i.e. Ptx needed=g(Path Loss) = g(f(distance))= h(distance). As UL signal power cannot be higher than a maximum Power Amplifier limit, the UL power transmitted by the user equipment may be expressed by a minimum function as follows: Ptx actual = min (h(distance); max User Equipment Power Amplification).

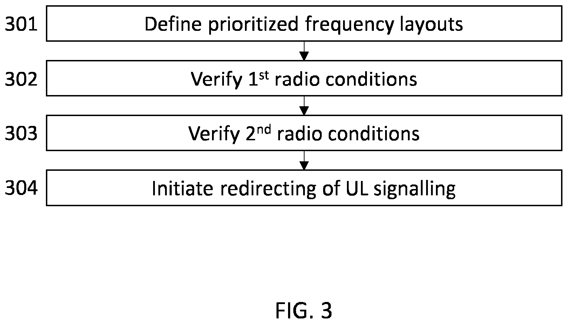

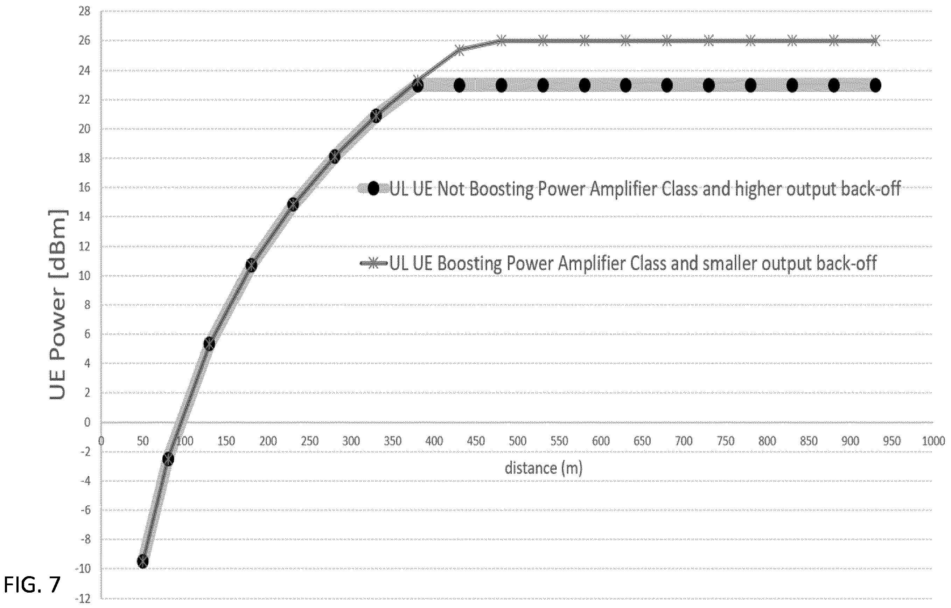

Figure 7 illustrates UE Power vs. distance for UEs with different Power boosting and back-off. In Figure 7, the UL user equipment transmitted power is shown as a function of the distance of user equipment from the radio base station. The transmitted power is shown for UEs at the same distance from network radio access node position: for a UE transmitting UL reference signal waveform (e.g. CP-OFDM) emitted by amplifier operating in nominal maximum output Power Class (for example, maximum User Equipment power amplification = +23 dBm), and for a UE transmitting modified UL reference signal waveform (e.g. UL DFT-s-OFDM) emitted at boosted maximum output UE Power Class operating point (for example, maximum User Equipment power amplification = +26 dBm). This results in UL noise rise effects (see Figure 3) that may be taken as input to access node UL traffic distribution among classified frequency layers priorities, for interference handling in the access network dimensioning. Depending on the user terminal mobile capabilities, the access node may transmit signaling to the UE to modify the UL reference signal waveform (e.g. CP-OFDM to UL DFT-s-OFDM) and at the same time to redirect service traffic for lower loaded, less interfered frequency layer.

The access node may define different frequency layouts priorities for UL Noise Rise handling in the network. The access node may verify the conditions for enabling the most appropriate UL reference signal waveform emission, and the conditions for signaling lower allowed UL power back-off and UL maximum output power class boosting (i.e. UE PA Class change). The access may initiate a signaling procedure to mitigate UL noise rise by redirecting UL service traffic to the most appropriate prioritized frequency layout.

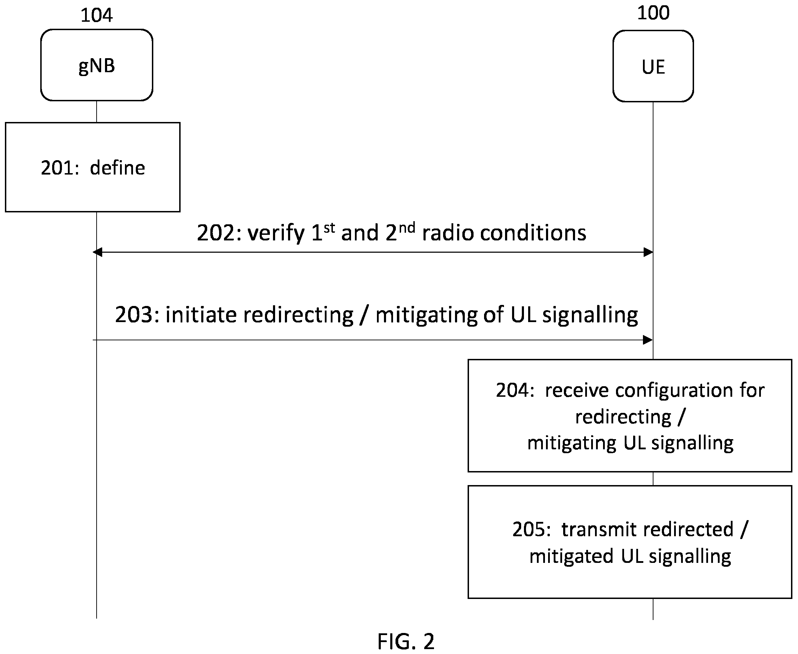

FIG. 2 illustrates a signal flow diagram according to an example embodiment. Referring to Figure 2, an apparatus, such as an access node 104, may define 201 different prioritized frequency layouts for uplink signal interference handling. The apparatus 104 may verify 202 first radio conditions for enabling most appropriate uplink reference signal waveform emission. The apparatus 104 may verify 202 second radio conditions for signalling lower allowed uplink power back-off and uplink maximum output power class boosting. The apparatus 104 may, based on the verifying, initiate 203 signalling to mitigate uplink signal interference by redirecting uplink service traffic to a most appropriate prioritized frequency layout. A device, such as a terminal device 100, may receive 204, from the apparatus 104, configuration signalling 203 for mitigating uplink signal interference by redirecting uplink service traffic to most appropriate prioritized frequency layout among different prioritized frequency layouts. The device 100 may, based on the configuration signalling 203, mitigate 205 the uplink signal interference by redirecting the uplink service traffic to the most appropriate prioritized frequency layout among the different prioritized frequency layouts.

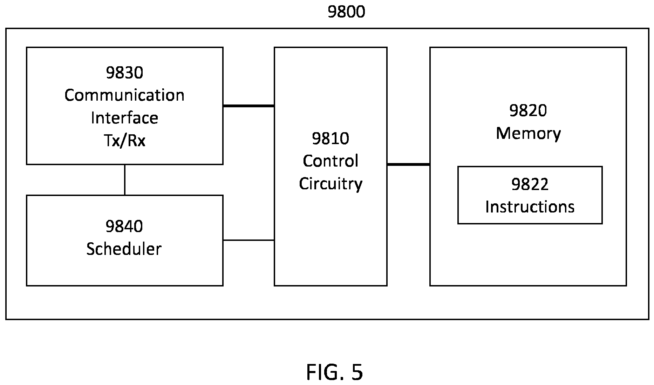

FIG. 3 illustrates a flow chart according to an example embodiment of a method performed by an apparatus 9800 depicted in FIG. 5. For example, the apparatus 9800 may be, or comprise, or be comprised in, a radio access network node 104, 104B, 104C or a distributed unit 105, 105B or a central unit 108, 108B.

Referring to FIG. 3, in block 301, the apparatus 104 may define different prioritized frequency layouts for uplink signal interference handling. The apparatus may, in block 302, verify first radio conditions for enabling most appropriate uplink reference signal waveform emission. The apparatus 104 may, in block 303, verify second radio conditions for signalling lower allowed uplink power back-off and uplink maximum output power class boosting. In block 304, the apparatus 104 may, based on the verifying, initiate signalling to mitigate uplink signal interference by redirecting uplink service traffic to a most appropriate prioritized frequency layout.

Said redirecting may comprise, during communication establishment or during call lifetime, configuring the terminal device 100 to change uplink reference signal waveform. Said uplink reference signal waveform may be selected by the apparatus 104 from Cyclic Prefix-Orthogonal Frequency Division Multiplexing, or low PAPR DFT-Spread Orthogonal Frequency Division Multiplexing. Said redirecting may comprise, in degraded radio conditions in cell edge, that the apparatus 104 configures the terminal device 100 to change uplink reference signal waveform to Pi/2-binary phase shift keying. The uplink DFT-Spread Orthogonal Frequency Division Multiplexing waveform, or the pi/2-binary phase shift keying, may be modulated with frequency shaping filtering. The apparatus 104 may transmit, to the terminal device 100, a value of downlink reference signal power emitted by a transmitter of the apparatus.

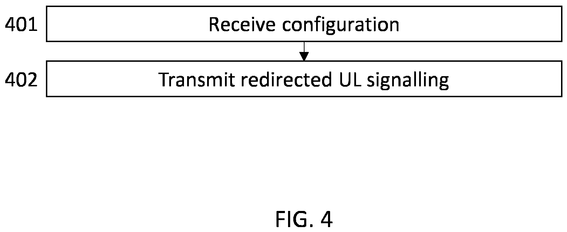

FIG. 4 illustrates a flow chart according to an example embodiment of a method performed by a device or an apparatus 9800 depicted in FIG. 5. For example, the device or apparatus 9800 may be, or comprise, or be comprised in, a terminal device or user equipment 100, 102.

Referring to FIG. 4, in block 401, the terminal device 100 may receive, from an access node 104, configuration signalling for mitigating uplink signal interference by redirecting uplink service traffic to most appropriate prioritized frequency layout among different prioritized frequency layouts. In block 402, the terminal device may, based on the configuration signalling, mitigate the uplink signal interference by redirecting the uplink service traffic to the most appropriate prioritized frequency layout among the different prioritized frequency layouts.

The terminal device 100 may receive, from the access node 104, a value of downlink reference signal power emitted by a transmitter of the access node, evaluate downlink path loss as a difference between the value of downlink reference signal power emitted by the transmitter of the access node, and a value of downlink reference signal power received by a receiver of the terminal device, and based on the downlink path loss, amplify uplink transmit power to compensate path loss attenuation encountered by uplink signal.

The terminal device 100 may, during communication establishment or during call lifetime, change uplink reference signal waveform. Said uplink reference signal waveform may be selected from Cyclic Prefix-Orthogonal Frequency Division Multiplexing, or low PAPR DFT-Spread Orthogonal Frequency Division Multiplexing. The terminal device 100 may, in degraded radio conditions in cell edge, change the uplink reference signal waveform to Pi/2-binary phase shift keying.

The blocks, related functions, and information exchanges (messages) described above by means of FIGS. 2-4 are in no absolute chronological order, and some of them may be performed simultaneously or in an order differing from the described one. Other functions can also be executed between them or within them, and other information may be sent, and/or other rules applied. Some of the blocks or part of the blocks or one or more pieces of information can also be left out or replaced by a corresponding block or part of the block or one or more pieces of information.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

FIG. 5 illustrates an example of an apparatus 9800 comprising means for performing one or more of the example embodiments described above. For example, the apparatus 9800 may be, or comprise, or be comprised in, a radio access network node 104, 104B, 104C or a distributed unit 105, 105B or a central unit 108, 108B, or a terminal device or user equipment 100, 102.

The apparatus 9800 may comprise, for example, a circuitry or a chipset applicable for realizing one or more of the example embodiments described above. The apparatus 9800 may be an electronic device comprising one or more electronic circuitries. The apparatus 9800 may comprise a communication control circuitry 9810 such as at least one processor, and at least one memory 9820 storing instructions 9822 which, when executed by the at least one processor, cause the apparatus 9800 to carry out one or more of the example embodiments described above. Such instructions 9822 may, for example, include computer program code (software). The at least one processor and the at least one memory storing the instructions may provide the means for providing or causing the performance of any of the methods and/or blocks described above.

The processor is coupled to the memory 9820. The processor is configured to read and write data to and from the memory 9820. The memory 9820 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The memory 9820 stores computer readable instructions that are executed by the processor. For example, non-volatile memory stores the computer readable instructions, and the processor executes the instructions using volatile memory for temporary storage of data and/or instructions.

The computer readable instructions may have been pre-stored to the memory 9820 or, alternatively or additionally, they may be received, by the apparatus, via an electromagnetic carrier signal and/or may be copied from a physical entity such as a computer program product. Execution of the computer readable instructions causes the apparatus 9800 to perform one or more of the functionalities described above.

The memory 9820 may be implemented using any suitable data storage technology, such as semiconductor-based memory devices, flash memory, magnetic memory devices and systems, optical memory devices and systems, fixed memory and/or removable memory. The memory may comprise a configuration database for storing configuration data, such as a current neighbour cell list, and, in some example embodiments, structures of frames used in the detected neighbour cells.

The apparatus 9800 may further comprise or be connected to a communication interface 9830, such as a radio unit, comprising hardware and/or software for realizing communication connectivity with one or more wireless communication devices according to one or more communication protocols. The communication interface 9830 comprises at least one transmitter (Tx) and at least one receiver (Rx) that may be integrated to the apparatus 9800 or that the apparatus 9800 may be connected to. The communication interface 9830 may provide means for performing some of the blocks for one or more example embodiments described above. The communication interface 9830 may comprise one or more components, such as: power amplifier, digital front end (DFE), analog-to-digital converter (ADC), digital-to-analog converter (DAC), frequency converter, (de)modulator, and/or encoder/decoder circuitries, controlled by the corresponding controlling units.

The communication interface 9830 provides the apparatus with radio communication capabilities to communicate in the wireless communication network. The communication interface may, for example, provide a radio interface to one or more UEs 100, 102. The apparatus 9800 may further comprise or be connected to another interface towards a core network 110, such as the network coordinator apparatus or AMF 111, and/or to the access nodes 104 of the wireless communication network.

The apparatus 9800 may further comprise a scheduler 9840 that is configured to allocate radio resources. The scheduler 9840 may be configured along with the communication control circuitry 9810 or it may be separately configured.

It is to be noted that the apparatus 9800 may further comprise various components not illustrated in FIG. 5. The various components may be hardware components and/or software components.

As used in this application, the term "circuitry" may refer to one or more or all of the following: a) hardware-only circuit implementations (such as implementations in only analog and/or digital circuitry); and b) combinations of hardware circuits and software, such as (as applicable): i) a combination of analog and/or digital hardware circuit(s) with software/firmware and ii) any portions of hardware processor(s) with software (including digital signal processor(s), software, and memory(ies) that work together to cause an apparatus, such as a mobile phone, to perform various functions); and c) hardware circuit(s) and/or processor(s), such as a microprocessor(s) or a portion of a microprocessor(s), that requires software (for example firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The techniques and methods described herein may be implemented by various means. For example, these techniques may be implemented in hardware (one or more devices), firmware (one or more devices), software (one or more modules), or combinations thereof. For a hardware implementation, the apparatus(es) of example embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, micro-controllers, microprocessors, other electronic units designed to perform the functions described herein, or a combination thereof. For firmware or software, the implementation can be carried out through modules of at least one chipset (for example procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

It will be obvious to a person skilled in the art that, as technology advances, the inventive concept may be implemented in various ways within the scope of the claims. The embodiments are not limited to the example embodiments described above, but may vary within the scope of the claims. Therefore, all words and expressions should be interpreted broadly, and they are intended to illustrate, not to restrict, the embodiments.

## Claims

1. An apparatus comprising at least one processor, and at least one memory storing instructions that, when executed by the at least one processor, cause the apparatus at least to:
define different prioritized frequency layouts for uplink signal interference handling;
verify first radio conditions for enabling most appropriate uplink reference signal waveform emission;
verify second radio conditions for signalling lower allowed uplink power back-off and uplink maximum output power class boosting; and
based on the verifying, initiate signalling to mitigate uplink signal interference by redirecting uplink service traffic to a most appropriate prioritized frequency layout.

2. The apparatus according to claim 1, wherein said redirecting comprises, during communication establishment or during call lifetime, configuring a terminal device to change uplink reference signal waveform.

3. The apparatus according to claim 2, wherein said uplink reference signal waveform is selected from
Cyclic Prefix-Orthogonal Frequency Division Multiplexing, or
low PAPR DFT-Spread Orthogonal Frequency Division Multiplexing.

4. The apparatus according to claim 2,
wherein said redirecting comprises, in degraded radio conditions in cell edge, configuring by the apparatus a terminal device to change uplink reference signal waveform to Pi/2-binary phase shift keying.

5. The apparatus according to any of the preceding claims, wherein the apparatus is being caused to:
transmit, to a terminal device, a value of downlink reference signal power emitted by a transmitter of the apparatus.

6. A device comprising at least one processor, and at least one memory storing instructions that, when executed by the at least one processor, cause the device at least to:
receive, from an access node, configuration signalling for mitigating uplink signal interference by redirecting uplink service traffic to most appropriate prioritized frequency layout among different prioritized frequency layouts; and
based on the configuration signalling, mitigate the uplink signal interference by redirecting the uplink service traffic to the most appropriate prioritized frequency layout among the different prioritized frequency layouts.

7. A device according to claim 6, wherein the device is being caused to:
receive, from the access node, a value of downlink reference signal power emitted by a transmitter of the access node;
evaluate downlink path loss as a difference between
the value of downlink reference signal power emitted by the transmitter of the access node, and
a value of downlink reference-signal power received by a receiver of the terminal device;
based on the downlink path loss, amplify uplink transmit power to compensate path loss attenuation encountered by uplink signal.

8. A device according to claim 6 or 7, wherein the device is being caused to:
during communication establishment or during call lifetime, change uplink reference signal waveform.

9. A device according to claim 8, wherein said uplink reference signal waveform is selected from
Cyclic Prefix-Orthogonal Frequency Division Multiplexing, or
low PAPR DFT-Spread Orthogonal Frequency Division Multiplexing.

10. A device according to claim 6 or 7, wherein the device is being caused to:
in degraded radio conditions in cell edge, change uplink reference signal waveform to Pi/2-binary phase shift keying.

11. A method comprising:
defining, by an apparatus, different prioritized frequency layouts for uplink signal interference handling;
verifying, by the apparatus, first radio conditions for enabling most appropriate uplink reference signal waveform emission;
verifying, by the apparatus, second radio conditions for signalling lower allowed uplink power back-off and uplink maximum output power class boosting; and
based on the verifying, initiating, by the apparatus, signalling to mitigate uplink signal interference by redirecting uplink service traffic to most appropriate prioritized frequency layout among said different prioritized frequency layouts.

12. A method according to claim 11, wherein said redirecting comprises, during communication establishment or during call lifetime, configuring by the apparatus a terminal device to change uplink reference signal waveform.

13. A method according to claim 12, wherein said uplink reference signal waveform is selected from
Cyclic Prefix-Orthogonal Frequency Division Multiplexing, or
low PAPR DFT-Spread Orthogonal Frequency Division Multiplexing.

14. A method according to claim 11, wherein said redirecting comprises, in degraded radio conditions in cell edge, configuring by the apparatus a terminal device to change uplink reference signal waveform to Pi/2-binary phase shift keying.

15. A method according to any of the preceding claims 11 to 14, comprising:
transmitting, by the apparatus to a terminal device, a value of downlink reference signal power emitted by a transmitter of the apparatus.

16. A method comprising:
receiving, by a terminal device from an access node, configuration signalling for mitigating uplink signal interference by redirecting uplink service traffic to most appropriate prioritized frequency layout among different prioritized frequency layouts; and
based on the configuration signalling, mitigating, by the terminal device, the uplink signal interference by redirecting the uplink service traffic to the most appropriate prioritized frequency layout among the different prioritized frequency layouts.

17. A method according to claim 16, comprising
receiving, by the terminal device from the access node, a value of downlink reference signal power emitted by a transmitter of the access node;
evaluating, by the terminal device, downlink path loss as a difference between
the value of downlink reference signal power emitted by the transmitter of the access node, and
a value of downlink reference signal power received by a receiver of the terminal device;
based on the downlink path loss, amplifying uplink transmit power to compensate path loss attenuation encountered by uplink signal.

18. A method according to claim 16 or 17, comprising, during communication establishment or during call lifetime, changing, by the terminal device, uplink reference signal waveform.

19. A method according to claim 18, wherein said uplink reference signal waveform is selected from
Cyclic Prefix-Orthogonal Frequency Division Multiplexing, or
low PAPR DFT-Spread Orthogonal Frequency Division Multiplexing.

20. A method according to claim 16 or 17, comprising, in degraded radio conditions in cell edge, changing, by the terminal device, the uplink reference signal waveform to Pi/2-binary phase shift keying.
